## Europäisches Patentamt
## European Patent Office
## Office européen des brevets

(19)

(11) Veröffentlichungsnummer: **0 002 647**
**B1**

(12) **EUROPÄISCHE PATENTSCHRIFT**

(45) Veröffentlichungstag der Patentschrift: 29.07.81

(51) Int. Cl.³: **G 02 B 17/08**

(21) Anmeldenummer: 78810023.8

(22) Anmeldetag: 16.11.78

(54) Kompaktes katadioptrisches Objektiv grosser Lichtstärke.

(30) Priorität: 08.12.77 CH 15052/77

(43) Veröffentlichungstag der Anmeldung:
27.06.79 Patentblatt 79/13

(45) Bekanntmachung des Hinweises auf die Patenterteilung:
29.07.81 Patentblatt 81/30

(84) Benannte Vertragsstaaten:
DE FR GB NL SE

(56) Entgegenhaltungen:
DE - A - 1 497 537
DE - A - 1 497 574
DE - A - 2 211 275
DE - B - 1 274 812
DE - C - 824 859
DE - C - 960 680
US - A - 3 632 190

(73) Patentinhaber: KERN & CO. AG Werke für
Präzisionsmechanik Optik und Elektronik
CH-5001 Aarau (CH)

(72) Erfinder: Canzek, Ludvik
Quellmattstrasse 3
CH-5035 Unterentfelden (CH)

(74) Vertreter: Seeger, Jan
c/o Kern & Co. AG
CH-5001 Aarau (CH)

# 0 002 647

## Kompaktes katadioptrisches Objektiv grosser Lichtstärke

Die Erfindung betrifft ein kompaktes katadioptrisches Objektiv grosser Lichtstärke, das aus einer sammelnden Frontlinse, einem Hauptspiegel, einem Gegenspiegel und einem Feldlinsensystem in der Nähe des Brennpunktes besteht.

Katadioptrische Objektive mit zwei spiegelnden Flächen sind bekannt. Sie werden meistens als abgewandelte Cassegrain-Objektive gebaut. Nach Cassegrain besteht ein derartiges Objektiv aus nur zwei Spiegeln, wobei der Hauptspiegel parabolische und der Gegenspiegel eine hyperbolische Form aufweist. Dieses Objektiv ist aber nur für die Bildmitte korrigiert. Ferner ist die Herstellung von präzisen asphärischen Flächen sehr kostspielig.

Abgewandelte Cassegrain-Objektive weisen nur sphärische Spiegelflächen auf, die Abbildungsfehler korrigiert man mit zusätzlichen ins Objektiv eingebauten Linsen, die auch eine Korrektur der Bildfehler ermöglichen.

Auch solche katadioptrische Objektive sind bereits bekannt. Eine Ausführungsform besteht z.B. aus einem zweilinsigen Frontteil, einem Haupt- und einem Gegenspiegel und einem Feldlinsensystem in der Nähe des Brennpunktes. Siehe hierzu Objektivbeispiel 1:3,5 in F.I. HAVLIČEK — L. ČANŽEK "Zum Korrigieren von Spiegelobjektiven", Deutsche Geodätische Kommission bei der Bayerischen Akademie der Wissenschaften, Reihe A, Heft 42, München 1963.

Ein weiteres derartiges Objektiv gemäss Schweizer-Patentschrift 542 454 ist in L. ČANŽEK "Lichtstarkes katadioptrisches Objektiv", Optica Acta, No. 12, 1971; Ibid., No. 4, 1972, beschrieben. Es besteht aus nur einer Frontlinse, deren verspiegelter zentraler Teil als Gegenspiegel wirkt, einer durchbohrten den Hauptspiegel tragenden Linse und einem Feldlinsensystem. Dieses Objektiv ist nahezu ideal korrigiert (siehe I. Powell "The calculation of the optical transfer function . . .", Optica Acta, No. 6, 1974) und entspricht dem neuesten Stand der Technik.

Die oben erwähnten und die übrigen bekannten Objektive haben aber mindestens einen der folgenden Nachteile:

— Die den Hauptspiegel tragende Linse wird zentral ausgebohrt. Das Bohren ist teuer, die Bearbeitung einer ringförmigen Linse ist komplizierter, die mechanische Stabilität geringer als bei einer Vollinse.

— Die Frontlinse, der Hauptspiegel und das Feldlinsensystem sind sehr zentrierempfindlich. Beim Nichteinhalten einer strengen Zentrierung erscheinen störende komatische und astigmatische Fehler.

— Die Montage der Feldlinsen im Objektiv erfordert eine erste präzise Fassung, eine weitere wird für die Befestigung des Feldlinsensystems im Gehäuse benötigt. Die unvermeidlichen mechanischen Zentrierfehler verursachen Koma und Astigmatismus.

Der Erfindung liegt die Aufgabe zugrunde, ein kompaktes katadioptrisches Objektiv grosser Lichtstärke zu berechnen, bei dem die obengenannten Nachteile vermindert oder beseitigt sind, das aber trotz einer Vereinfachung des Aufbaus keine Verminderung der Lichtstärke und der Abbildungsgüte aufweist.

Erfindungsgemäss wird das dadurch erreicht, dass das Objektiv nur zwei optische Glieder aufweist, auf die je der Haupt- bzw. Gegenspiegel aufgebracht sind und dass auf dem zentralen Teil der objektseitigen Fläche einer den Hauptspiegel tragenden Linse mindestens eine Feldlinse aufgekittet ist.

Untersuchungen haben gezeigt, dass bei Objektiven nach dieser Erfindung die vorher genannten Nachteile vermindert oder völlig beseitigt werden bei Beibehalten der hohen Lichtstärke und Abbildungsgüte.

Im folgenden werden anhand von Tabellen und der dazugehörigen Figuren der Zeichnung die Konstruktionsdaten von vier Ausführungsbeispielen beschrieben.

Die Objektive nach den Konstruktionsdaten der Tabellen 1 und 2 bestehen aus nur zwei optischen Gliedern. Der Gegenspiegel ist auf dem zentralen Teil der bildseitigen Fläche der Frontlinse aufgebracht, auf den zentralen Teil der objektseitigen Fläche der den Hauptspiegel tragenden Linse sind eine bzw. zwei Feldlinsen gekittet. Die den Hauptspiegel tragende Linse ist eine Vollinse. Die Bildqualität der Objkektive ist auf Zentrierfehler sehr wenig empfindlich.

Das Objektiv nach Konstruktionsdaten der Tabelle 3 besteht ebenfalls aus zwei optischen Gliedern. Der Gegenspiegel ist auf dem zentralen Teil der objektseitigen Fläche der Frontlinse aufgebracht und auf dem zentralen Teil der bildseitigen Fläche der Frontlinse ist eine Linse gekittet. Auf den zentralen Teil der objektseitigen Fläche der den Hauptspiegel tragenden Linse ist eine Feldlinse gekittet. Die Hauptspiegellinse ist eine Vollinse. Die Bildqualität des Objektivs ist auf Zentrierfehler vermindert empfindlich.

Auch das Objektiv nach Konstruktionsdaten der Tabelle 4 besteht aus zwei optischen Gliedern. Auf dem zentralen Teil der bildseitigen Fläche der Frontlinse ist eine rückflächenverspiegelte Linse aufgekittet, die als Gegenspiegellinse dient. Auf dem zentralen Teil der objektseitigen Fläche der den Hauptspiegel tragenden Linse ist eine Feldlinse aufgekittet. Auch hier ist die Hauptspiegellinse eine Vollinse. Die Bildqualität des Objektivs ist auf Zentrierfehler sehr wenig empfindlich.

2

**0 002 647**

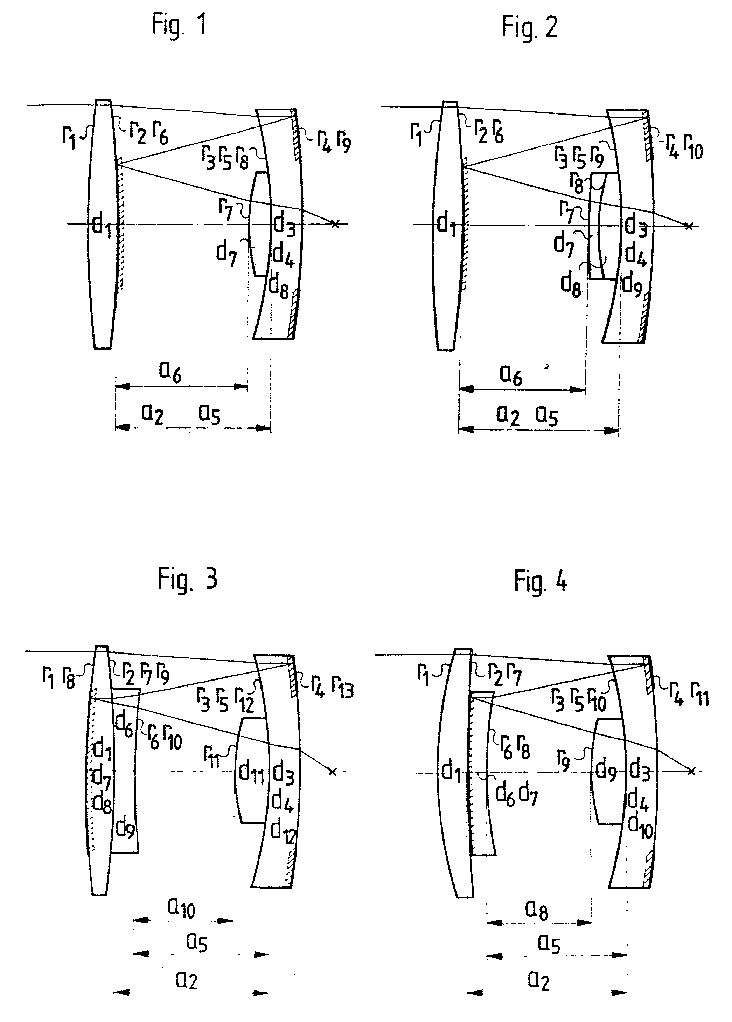

Tabelle 1 (Fig. 1)

| Radien | Dicken und Abstände | Glasart |
|---|---|---|
| $r_1 = \quad 747{,}831$ | $d_1 = \quad 7{,}5$ | SF55 |
| $r_2 = -\,2214{,}349$ | $a_2 = 46{,}9$ | |
| $r_3 = -\quad 137{,}033$ | $d_3 = \quad 8$ | LaF23 |
| $r_4 = -\quad 198{,}791$ | $d_4 = d_3$ | LaF23 |
| $r_5 = r_3$ | $a_5 = a_2$ | |
| $r_6 = r_2$ | $a_6 = 41{,}9$ | |
| $r_7 = \quad 37{,}388$ | $d_7 = \quad 5$ | FK3 |
| $r_8 = r_3$ | $d_8 = d_3$ | LaF23 |
| $r_9 = r_4$ | | |
| $F = 1{:}1{,}2$ | $f = 99{,}7$ | $s' = 8{,}7$ |

Tabelle 2 (Fig. 2)

| Radien | Dicken und Abstände | Glasart |
|---|---|---|
| $r_1 = \quad 639{,}795$ | $d_1 = \quad 7{,}5$ | SF3 |
| $r_2 = -\,2444{,}988$ | $a_2 = 47{,}1$ | |
| $r_3 = -\quad 138{,}122$ | $d_3 = \quad 8$ | LaF23 |
| $r_4 = -\quad 201{,}857$ | $d_4 = d_3$ | LaaF23 |
| $r_5 = r_3$ | $a_5 = a_2$ | |
| $r_6 = r_2$ | $a_6 = 39{,}7$ | |
| $r_7 = 37{,}94$ | $d_7 = \quad 2{,}5$ | F8 |
| $r_8 = 29{,}527$ | $d_8 = \quad 4{,}9$ | FK3 |
| $r_9 = r_3$ | $d_9 = d_3$ | LaF23 |
| $r_{10} = r_4$ | | |
| $F = 1{:}1{,}2$ | $f = 99{,}5$ | $s' = 9{,}0$ |

**0 002 647**

Tabelle 3 (Fig. 3)

| Radien | Dicken und Abstände | Glasart |
|---|---|---|
| $r_1 = 343{,}171$ | $d_1 = 7{,}5$ | KF3 |
| $r_2 = -590{,}667$ | $a_2 = 53{,}7$ | |
| $r_3 = -267{,}451$ | $d_3 = 8$ | BK7 |
| $r_4 = -420{,}875$ | $d_4 = d_3$ | BK7 |
| $r_5 = r_3$ | $a_5 = 48{,}9$ | |
| $r_6 = 212{,}359$ | $d_6 = 4{,}8$ | LF3 |
| $r_7 = r_2$ | $d_7 = d_1$ | KF3 |
| $r_8 = r_1$ | $d_8 = d_1$ | KF3 |
| $r_9 = r_2$ | $d_9 = d_6$ | LF3 |
| $r_{10} = r_6$ | $a_{10} = 40{,}9$ | |
| $r_{11} = 35{,}652$ | $d_{11} = 8$ | BaK4 |
| $r_{12} = r_3$ | $d_{12} = d_3$ | BK7 |
| $r_{13} = r_4$ | | |
| $F = 1{:}1{,}2$ | $f = 99{,}4$ | $s' = 7{,}6$ |

Tabelle 4 (Fig. 4)

| Radien | Dicken und Abstände | Glasart |
|---|---|---|
| $r_1 = 174{,}38$ | $d_1 = 7{,}5$ | KF1 |
| $r_2 = 1165{,}501$ | $a_2 = 46{,}7$ | |
| $r_3 = -205{,}617$ | $d_3 = 8$ | F2 |
| $r_4 = -280{,}458$ | $d_4 = d_3$ | F2 |
| $r_5 = r_3$ | $a_5 = 42{,}4$ | |
| $r_6 = 369{,}399$ | $d_6 = 4{,}3$ | F13 |
| $r_7 = r_2$ | $d_7 = d_6$ | F13 |
| $r_8 = r_6$ | $a_8 = 32{,}4$ | |
| $r_9 = 37{,}489$ | $d_9 = 10$ | FK3 |
| $r_{10} = r_3$ | $d_{10} = d_3$ | F2 |
| $r_{11} = r_4$ | | |
| $F = 1{:}1{,}2$ | $f = 99{,}3$ | $s' = 10{,}0$ |

Die beschriebenen Ausführungsbeispiele der vorliegenden Erfindung sind sphärisch, komatisch, chromatisch und astigmatisch korrigierte Objektive. Sie sind kompakt gebaut und eine mechanische Fassung des Feldlinsensystems fällt weg. Durch die auf ein Minimum beschränkte Anzahl der optischen Elemente sind sie in der Herstellung wirtschaftlicher und weniger empfindlich auf unvermeidliche Fabrikations- und Montagefehler als bekannte Objektive.

4

# 0 002 647

**Patentansprüche**

1. Kompaktes katadioptrisches Objektiv grosser Lichtstärke mit einer sammelnden Frontlinse, einem Hauptspiegel, einem Gegenspiegel und einem Feldlinsensystem in der Nähe des Brennpunktes, dadurch gekennzeichnet, dass das Objektiv nur zwei optische Glieder aufweist, auf die je der Haupt- bzw. Gegenspiegel aufgebracht sind, und das auf dem zentralen Teil der objektseitigen Fläche einer den Hauptspiegel tragenden Linse mindestens eine Feldlinse aufgekittet ist.

2. Objektiv nach Patentanspruch 1, dadurch gekennzeichnet, dass der Gegenspiegel auf dem zentralen Teil der bildseitigen Fläche der Frontlinse aufgebracht ist.

3. Objektiv nach Patentanspruch 1, dadurch gekennzeichnet, dass der Gegenspiegel auf dem zentralen Teil der objektseitigen Fläche der Frontlinse aufgebracht ist, dass auf dem zentralen Teil der bildseitigen Fläche der Frontlinse eine Linse gekittet ist.

4. Objektiv nach Patentanspruch 1, dadurch gekennzeichnet, dass auf dem zentralen Teil der bildseitigen Fläche der Frontlinse eine rückflächenverspiegelte Linse aufgekittet ist.

5. Objektiv nach Patentanspruch 2, gekennzeichnet durch folgende Daten in beliebigen Einheiten:

| Radien | Dicken und Abstände | Glasart |
|---|---|---|
| $r_1 = +\ 747{,}831$ | $d_1 =\ 7{,}5$ | SF55 |
| $r_2 = -\ 2214{,}349$ | $a_2 = 46{,}9$ | |
| $r_3 = -\ 137{,}033$ | $d_3 =\ 8$ | LaF23 |
| $r_4 = -\ 198{,}791$ | $d_4 = d_3$ | LaF23 |
| $r_5 = r_3$ | $a_5 = a_2$ | |
| $r_6 = r_2$ | $a_6 = 41{,}9$ | |
| $r_7 = +\ 37{,}388$ | $d_7 =\ 5$ | FK3 |
| $r_8 = r_3$ | $d_8 = d_3$ | LaF23 |
| $r_9 = r_4$ | | |
| $F = 1{:}1{,}2$ | $f = 99{,}7$ | $s' = 8{,}7$ |

6. Objektiv nach Patentanspruch 2, gekennzeichnet durch folgende Daten in beliebigen Einheiten:

| Radien | Dicken und Abstände | Glasart |
|---|---|---|
| $r_1 = +\ 639{,}795$ | $d_1 =\ 7{,}5$ | SF3 |
| $r_2 = -\ 2444{,}988$ | $a_2 = 47{,}1$ | |
| $r_3 = -\ 138{,}122$ | $d_3 =\ 8$ | LaF23 |
| $r_4 = -\ 201{,}857$ | $d_4 = d_3$ | LaF23 |
| $r_5 = r_3$ | $a_5 = a_2$ | |
| $r_6 = r_2$ | $a_6 = 39{,}7$ | |
| $r_7 = +\ 37{,}94$ | $d_7 =\ 2{,}5$ | F8 |
| $r_8 = +\ 29{,}527$ | $d_8 =\ 4{,}9$ | FK3 |
| $r_9 = r_3$ | $d_9 = d_3$ | LaF23 |
| $r_{10} = r_4$ | | |
| $F = 1{:}1{,}2$ | $f = 99{,}5$ | $s' = 9{,}0$ |

5

7. Objektiv nach Patentanspruch 3, gekennzeichnet durch folgende Daten in beliebigen Einheiten:

| Radien | Dicken und Abstände | Glasart |
|---|---|---|
| $r_1 = +343,171$ | $d_1 = 7,5$ | KF3 |
| $r_2 = -590,667$ | $a_2 = 53,7$ | |
| $r_3 = -267,451$ | $d_3 = 8$ | BK7 |
| $r_4 = -420,875$ | $d_4 = d_3$ | BK7 |
| $r_5 = r_3$ | $a_5 = 48,9$ | |
| $r_6 = +212,359$ | $d_6 = 4,8$ | LF3 |
| $r_7 = r_2$ | $d_7 = d_1$ | KF3 |
| $r_8 = r_1$ | $d_8 = d_1$ | KF3 |
| $r_9 = r_2$ | $d_9 = d_6$ | LF3 |
| $r_{10} = r_6$ | $a_{10} = 40,9$ | |
| $r_{11} = +35,652$ | $d_{11} = 8$ | BaK4 |
| $r_{12} = r_3$ | $d_{12} = d_3$ | BK7 |
| $r_{13} = r_4$ | | |
| $F = 1{:}1,2$ | $f = 99,4$ | $s' = 7,6$ |

8. Objektiv nach Patentanspruch 4, gekennzeichnet durch folgende Daten in beliebigen Einheiten:

| Radien | Dicken und Abstände | Glasart |
|---|---|---|
| $r_1 = +174,38$ | $d_1 = 7,5$ | KF1 |
| $r_2 = +1165,501$ | $a_2 = 46,7$ | |
| $r_3 = -205,617$ | $d_3 = 8$ | F2 |
| $r_4 = -280,458$ | $d_4 = d_3$ | F2 |
| $r_5 = r_3$ | $a_5 = 42,4$ | |
| $r_6 = +369,399$ | $d_6 = 4,3$ | F13 |
| $r_7 = r_2$ | $d_7 = d_6$ | F13 |
| $r_8 = r_6$ | $a_8 = 32,4$ | |
| $r_9 = +37,489$ | $d_9 = 10$ | FK3 |
| $r_{10} = r_3$ | $d_{10} = d_3$ | F2 |
| $r_{11} = r_4$ | | |
| $F = 1{:}1,2$ | $f = 99,3$ | $s' = 10,0$ |

**Claims**

1. Compact catadioptic objective of high speed with a positive front lens, a main mirror, a counter mirror and a field lens system adjacent to the focal point, thereby characterized, that the objective has only two optical members, on one member being applied the main mirror and on the other member being applied the counter mirror, and that at least one field lens element is cemented to the central portion of the surface toward the object side of a lens carrying the main mirror.

2. Objective according to claim 1, thereby characterized, that the counter mirror is applied to the central portion of the surface toward the image side of the front lens.

3. Objective according to claim 1, thereby characterized, that the counter mirror is applied to the central portion of the surface toward the object side of the front lens and that a lens is cemented to the central portion of the surface toward the image side of the front lens.

4. Objective according to claim 1, thereby characterized, that a second-surface-silvered lens is cemented to the central portion of the surface toward the image side of the front lens.

5. Objective according to claim 2, characterized by the following numerical values of any unit of length:

| radii | thicknesses and separations | type of glass |
|---|---|---|
| $r_1 = +\ 747{,}831$ | $d_1 =\ 7{,}5$ | SF55 |
| $r_2 = -\ 2214{,}349$ | $a_2 = 46{,}9$ | |
| $r_3 = -\ 137{,}033$ | $d_3 =\ 8$ | LaF23 |
| $r_4 = -\ 198{,}791$ | $d_4 = d_3$ | LaF23 |
| $r_5 = r_3$ | $a_5 = a_2$ | |
| $r_6 = r_2$ | $a_6 = 41{,}9$ | |
| $r_7 = +\ 37{,}388$ | $d_7 =\ 5$ | FK3 |
| $r_8 = r_3$ | $d_8 = d_3$ | LaF23 |
| $r_9 = r_4$ | | |
| $F = 1{:}1{,}2$ | $f = 99{,}7$ | $s' = 8{,}7$ |

where f is the focal length of the system, r is the radius of curvature of the indicated elements.

6. Objective according to claim 2, characterized by the following numerical values of any unit of length:

| radii | thicknesses and separations | type of glass |
|---|---|---|
| $r_1 = +\ 639{,}795$ | $d_1 =\ 7{,}5$ | SF3 |
| $r_2 = -\ 2444{,}988$ | $a_2 = 47{,}1$ | |
| $r_3 = -\ 138{,}122$ | $d_3 =\ 8$ | LaF23 |
| $r_4 = -\ 201{,}857$ | $d_4 = d_3$ | LaF23 |
| $r_5 = r_3$ | $a_5 = a_2$ | |
| $r_6 = r_2$ | $a_6 = 39{,}7$ | |
| $r_7 = +\ 37{,}94$ | $d_7 =\ 2{,}5$ | F8 |
| $r_8 = +\ 29{,}527$ | $d_8 =\ 4{,}9$ | FK3 |
| $r_9 = r_3$ | $d_9 = d_3$ | LaF23 |
| $r_{10} = r_4$ | | |
| $F = 1{:}1{,}2$ | $f = 99{,}5$ | $s' =\ 9{,}0$ |

7. Objective according to claim 3, characterized by the following numerical values of any unit of length:

| radii | thicknesses and separations | type of glass |
|---|---|---|
| $r_1 = +343{,}171$ | $d_1 = 7{,}5$ | KF3 |
| $r_2 = -590{,}667$ | $a_2 = 53{,}7$ | |
| $r_3 = -267{,}451$ | $d_3 = 8$ | BK7 |
| $r_4 = -420{,}875$ | $d_4 = d_3$ | BK7 |
| $r_5 = r_3$ | $a_5 = 48{,}9$ | |
| $r_6 = +212{,}359$ | $d_6 = 4{,}8$ | LF3 |
| $r_7 = r_2$ | $d_7 = d_1$ | KF3 |
| $r_8 = r_1$ | $d_8 = d_1$ | KF3 |
| $r_9 = r_2$ | $d_9 = d_6$ | LF3 |
| $r_{10} = r_6$ | $a_{10} = 40{,}9$ | |
| $r_{11} = +35{,}652$ | $d_{11} = 8$ | BaK4 |
| $r_{12} = r_3$ | $d_{12} = d_3$ | BK7 |
| $r_{13} = r_4$ | | |
| $F = 1{:}1{,}2$ | $f = 99{,}4$ | $s' = 7{,}6$ |

8. Objective according to claim 4, characterized by the following numerical values of any unit of length:

| radii | thicknesses and separations | type of glass |
|---|---|---|
| $r_1 = +174{,}38$ | $d_1 = 7{,}5$ | KF1 |
| $r_2 = +1165{,}501$ | $a_2 = 46{,}7$ | |
| $r_3 = -205{,}617$ | $d_3 = 8$ | F2 |
| $r_4 = -280{,}458$ | $d_4 = d_3$ | F2 |
| $r_5 = r_3$ | $a_5 = 42{,}4$ | |
| $r_6 = +369{,}399$ | $d_6 = 4{,}3$ | F13 |
| $r_7 = r_2$ | $d_7 = d_6$ | F13 |
| $r_8 = r_6$ | $a_8 = 32{,}4$ | |
| $r_9 = +37{,}489$ | $d_9 = 10$ | FK3 |
| $r_{10} = r_3$ | $d_{10} = d_3$ | F2 |
| $r_{11} = r_4$ | | |
| $F = 1{:}1{,}2$ | $f = 99{,}3$ | $s' = 10{,}0$ |

# 0 002 647

**Revendications**

1. Objectif catadioptrique compact de grande ouverture relative avec une lentille antérieure convergente, un miroir principal, un contre-miroir et un système de lentilles de champ voisin du foyer, caractérisé par le fait qu'il comprend seulement deux membres optiques, le miroir principal étant appliqué sur l'un des deux membres et le contre-miroir étant appliqué sur l'autre membre optique, et par le fait qu'au moins un élément du système de lentilles de champ est mastiqué à la partie centrale de la surface vers l'objet d'une lentille portant le miroir principal.

2. Objectif selon la revendication 1, caractérisé par le fait que le contre-miroir est appliqué sur la partie centrale de la surface vers l'image de la lentille de front.

3. Objectif selon la revendication 1, caractérisé par le fait que le contre-miroir est appliqué sur la partie centrale de la surface vers l'objet de la lentille de front et par le fait qu'une lentille est mastiqué à la partie centrale de la surface vers l'image de la lentille de front.

4. Objectif selon la revendication 1, caractérisé par le fait qu'une lentille miroitée en arrière est mastiqué à la partie centrale de la surface vers l'image de la lentille de front.

5. Objectif selon la revendication 2, caractérisé par les données numériques suivantes d'unité de longueur quelconque:

| rayons | épaisseurs et séparations | type de verre |
|---|---|---|
| $r_1 = +\ 747{,}831$ | $d_1 = 7{,}5$ | SF55 |
| $r_2 = -\ 2214{,}349$ | $a_2 = 46{,}9$ | |
| $r_3 = -\ 137{,}033$ | $d_3 = 8$ | LaF23 |
| $r_4 = -\ 198{,}791$ | $d_4 = d_3$ | LaF23 |
| $r_5 = r_3$ | $a_5 = a_2$ | |
| $r_6 = r_2$ | $a_6 = 41{,}9$ | |
| $r_7 = +\ 37{,}388$ | $d_7 = 5$ | FK3 |
| $r_8 = r_3$ | $d_8 = d_3$ | LaF23 |
| $r_9 = r_4$ | | |
| $F = 1{:}1{,}2$ | $f = 99{,}7$ | $s' = 8{,}7$ |

où f est la distance focale du système optique et r indique le rayon de courbure des surfaces.

6. Objectif selon la revendication 2, caractérisé par les données numériques suivantes d'unité de longueur quelconque:

9

## 0 002 647

| rayons | épaisseurs et séparations | type de verre |
|---|---|---|
| $r_1 = +\ 639{,}795$ | $d_1 =\ 7{,}5$ | SF3 |
| $r_2 = -\ 2444{,}988$ | $a_2 = 47{,}1$ | |
| $r_3 = -\ 138{,}122$ | $d_3 =\ 8$ | LaF23 |
| $r_4 = -\ 201{,}857$ | $d_4 = d_3$ | LaF23 |
| $r_5 = r_3$ | $a_5 = a_2$ | |
| $r_6 = r_2$ | $a_6 = 39{,}7$ | |
| $r_7 = +\ 37{,}94$ | $d_7 =\ 2{,}5$ | F8 |
| $r_8 = +\ 29{,}527$ | $d_8 =\ 4{,}9$ | FK3 |
| $r_9 = r_3$ | $d_9 = d_3$ | LaF23 |
| $r_{10} = r_4$ | | |
| $F = 1{:}1{,}2$ | $f = 99{,}5$ | $s' = 9{,}0$ |

7. Objectif selon la revendication 3, caractérisé par les données numériques suivantes d'unité de longueur quelconque:

| rayons | épaisseurs et séparations | type de verre |
|---|---|---|
| $r_1 = +\ 343{,}171$ | $d_1 =\ 7{,}5$ | KF3 |
| $r_2 = -\ 590{,}667$ | $a_2 = 53{,}7$ | |
| $r_3 = -\ 267{,}451$ | $d_3 =\ 8$ | BK7 |
| $r_4 = -\ 420{,}875$ | $d_4 = d_3$ | BK7 |
| $r_5 = r_3$ | $a_5 = 48{,}9$ | |
| $r_6 = +\ 212{,}359$ | $d_6 =\ 4{,}8$ | LF3 |
| $r_7 = r_2$ | $d_7 = d_1$ | KF3 |
| $r_8 = r_1$ | $d_8 = d_1$ | KF3 |
| $r_9 = r_2$ | $d_9 = d_6$ | LF3 |
| $r_{10} = r_6$ | $a_{10} = 40{,}9$ | |
| $r_{11} = +\ 35{,}652$ | $d_{11} =\ 8$ | BaK4 |
| $r_{12} = r_3$ | $d_{12} = d_3$ | BK7 |
| $r_{13} = r_4$ | | |
| $F = 1{:}1{,}2$ | $f = 99{,}4$ | $s' = 7{,}6$ |

8. Objectif selon la revendication 4, caractérisé par les données numériques suivantes d'unité de longueur quelconque:

10

| rayons | épaisseurs et séparations | type de verre |
|---|---|---|
| $r_1 = +174,38$ | $d_1 = 7,5$ | KF1 |
| $r_2 = +1165,501$ | $a_2 = 46,7$ | |
| $r_3 = -205,617$ | $d_3 = 8$ | F2 |
| $r_4 = -280,458$ | $d_4 = d_3$ | F2 |
| $r_5 = r_3$ | $a_5 = 42,4$ | |
| $r_6 = +369,399$ | $d_6 = 4,3$ | F13 |
| $r_7 = r_2$ | $d_7 = d_6$ | F13 |
| $r_8 = r_6$ | $a_8 = 32,4$ | |
| $r_9 = +37,489$ | $d_9 = 10$ | FK3 |
| $r_{10} = r_3$ | $d_{10} = d_3$ | F2 |
| $r_{11} = r_4$ | | |
| $F = 1{:}1,2$ | $f = 99,3$ | $s' = 10,0$ |

0 002 647

Fig. 1

Fig. 2

Fig. 3

Fig. 4

1